# EUROPEAN PATENT APPLICATION

(11) **EP 1 674 916 A1**
(43) Date of publication of application: **28.06.2006**
(21) Application number: 05028209.4
(22) Date of filing: 22.12.2005
(51) Int. Cl.: G02C 9/00

(54) **Interchangeable spectacles and sunshade clip assembly**

(30) Priority: 23.12.2004 KR 2004036576 P
(71) Applicant: Lee, Suk Jae, Buk-Gu, Taegu (KR); Lee, Ju-Jae, 1190 Jisan-Dong Susung-Gu Daegu (KR); Lee, Hyun-Jun, Buk-Gu Daegu (KR); Lee, Sung-Jun, 1190 Jisan-Dong Susung-Gu Daegu (KR)
(72) Inventor: Lee, Suk Jae, Buk-Gu, Taegu (KR); Lee, Ju-Jae, 1190 Jisan-Dong Susung-Gu Daegu (KR); Lee, Hyun-Jun, Buk-Gu Daegu (KR); Lee, Sung-Jun, 1190 Jisan-Dong Susung-Gu Daegu (KR)
(74) Representative: Beetz & Partner

(57) **Abstract**

Disclosed herein are interchangeable spectacles (1) and sunshade clip (100) assembly, comprising a spectacle frame (50), spectacles (1) and a sunshade clip (100). The spectacle frame (50) includes a frame bar (55) integrally formed with or hinge connected to a pair of temple arms (51) so as to serve as a lens frame, a magnet piece (56) extending rearward from the center of the frame bar (55), and one or more magnets (M1) incorporated in the magnet piece (56). The spectacles include a pair of lenses (10, 11) connected to each other via a bridge (15), and an approximately U-shaped insert (20) centrally affixed at the bridge (15) to correspond to the magnet piece (56) and having upper and lower insert pieces (21, 22). One or more magnets (M1) are incorporated in one of the upper and lower insert pieces (21, 22). The sunshade clip (100) includes a pair of sunshade lenses (101, 102) connected to each other via a sunshade bridge (105), and an approximately U-shaped coupling insert (110) integrally injection molded with the sunshade bridge (105) to correspond to the magnet piece (56) and having upper and lower insert pieces. A magnet (M1) is incorporated in a respective one of the insert pieces. Thereby, the spectacle frame (55) and the sunshade clip (100) are selectively combined with one another to achieve various different designs of the assembly.

## Description

### BACKGROUND OF THE INVENTION

### Field of the Invention

The present invention relates to an interchangeable spectacles and sunshade clip assembly, and more particularly, to an interchangeable spectacles and sunshade clip assembly in which spectacles, a spectacle frame and a sunshade clip are formed as separate elements and can be freely recombined, resulting in various different designs of the assembly depending on the wearer's taste.

### SUMMARY OF THE INVENTION

It is an object of the present invention to provide an interchangeable spectacles and sunshade clip assembly which can meet customer's diversified demands for the design of the assembly through interchangeable combination of separate elements, such as spectacles, a spectacle frame and a sunshade clip.

It is another object of the present invention to provide an interchangeable spectacles and sunshade clip assembly in which a sunshade clip can be detachably attached to a spectacles/spectacle frame assembly by means of magnets so as to be selectively used to respond to a brightness change possibly caused while a wearer drives a car or enjoys outdoor sports, thereby being capable of eliminating the need for separate sunglasses and providing convenience in use.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a perspective view illustrating an interchangeable spectacles and sunshade clip assembly in accordance with the first embodiment of the present invention;
Fig. 2 is an exploded perspective view illustrating respective elements of the interchangeable spectacles and sunshade clip assembly shown in Fig. 1;
Fig. 3 is a partially cut-away rear perspective view illustrating the important portion A marked in Fig. 2;
Fig. 4 is a partially cut-away perspective view explaining the coupling relationship of spectacles and a spectacle frame;
Fig. 5 is a partially cut-away perspective view illustrating the coupling relationship of the spectacles, the spectacle frame and a sunshade clip;
Fig. 6 is a partially cut-away rear perspective view illustrating an interchangeable spectacles and sunshade clip assembly in accordance with the first modified form of the first embodiment; and
Fig. 7 is a partially cut-away rear perspective view illustrating an interchangeable spectacles and sunshade clip assembly in accordance with the second form of the first embodiment of the present invention.
Fig. 8 is a partially cut-away rear perspective view illustrating an interchangeable spectacles and sunshade clip assembly in accordance with the third form of the first embodiment of the present invention.
Fig. 9 is a perspective view illustrating an interchangeable spectacles and sunshade clip assembly in accordance with the second embodiment of the present invention;
Fig.10 is a perspective view illustrating an interchangeable spectacles and sunshade clip assembly in accordance with the another form of the second embodiment the present invention;

### DESCRIPTION OF THE PREFERRED EMBODIMENTS

Now, preferred and alternative embodiments of the present invention in relation with an interchangeable spectacles and sunshade clip assembly will be described in detail with reference to the annexed drawings.

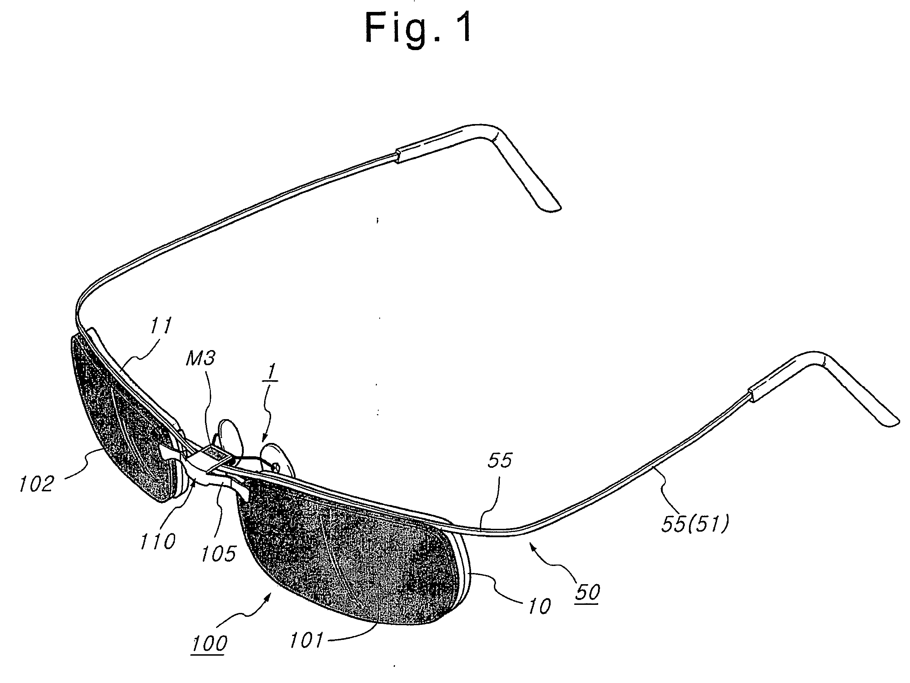

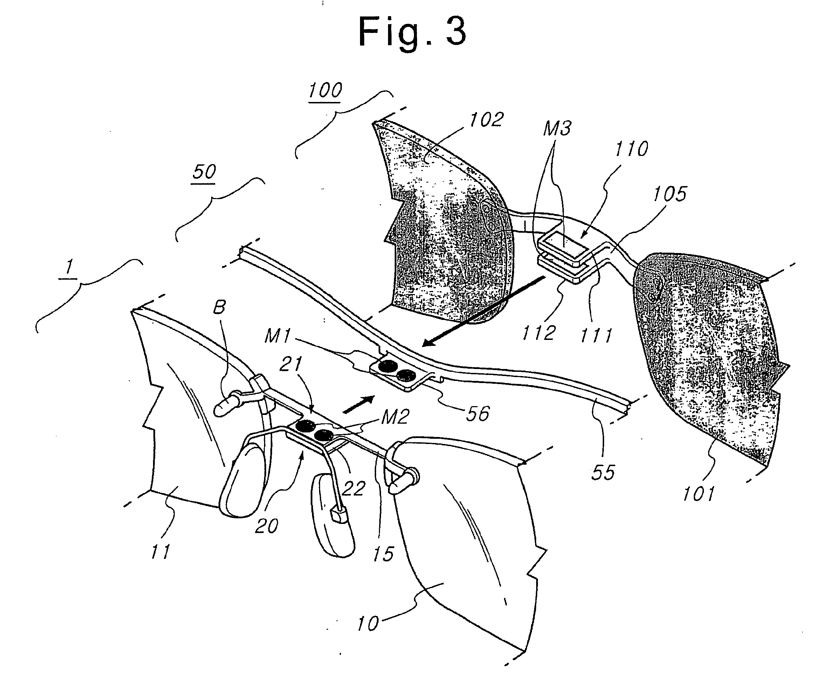

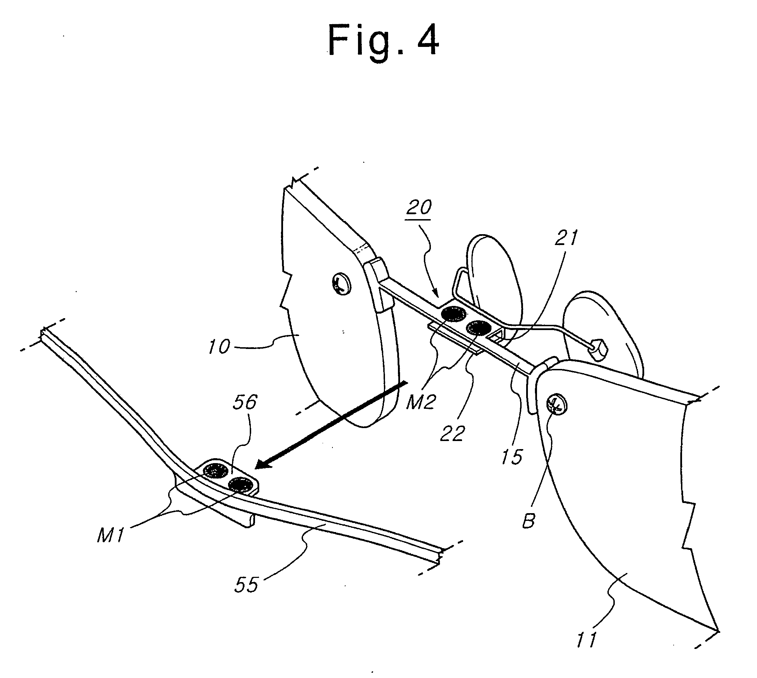

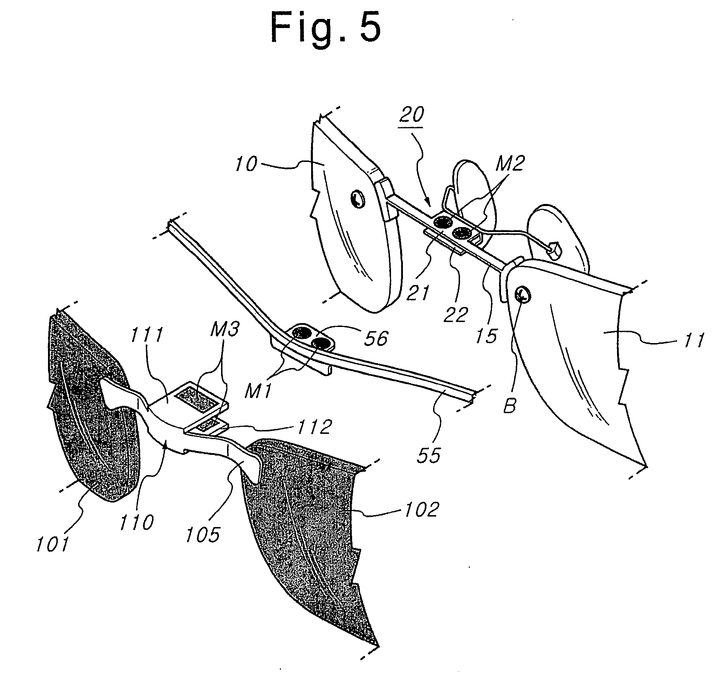

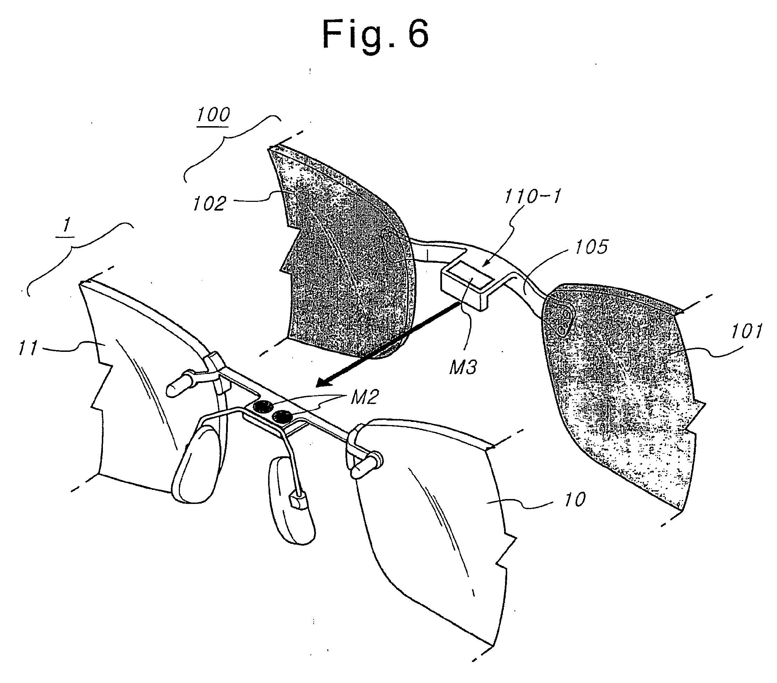

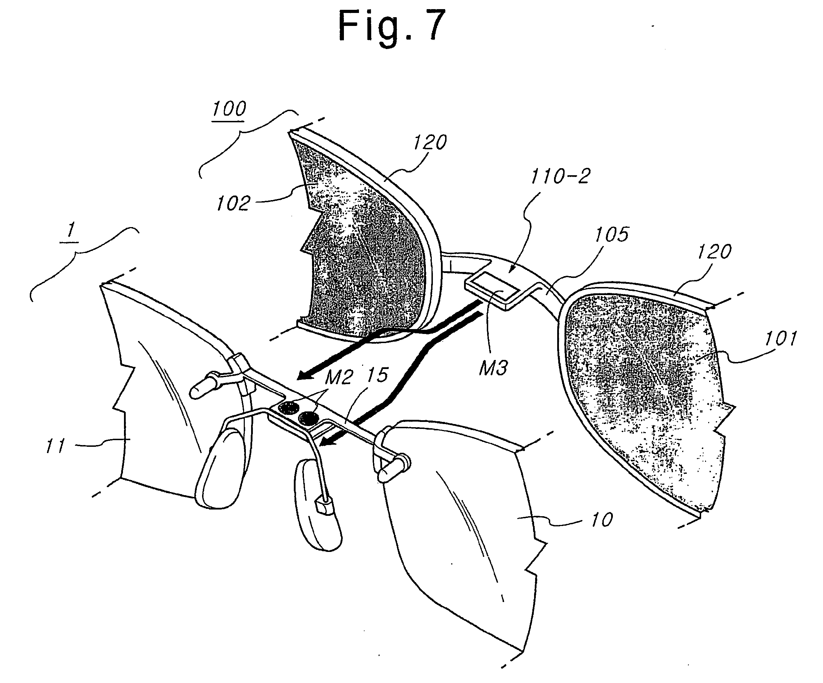

Figs. 1 to 5 illustrate an interchangeable spectacles and sunshade clip assembly in accordance with the preferred first embodiment of the present invention, and Figs. 6 and 7 illustrate different alternative forms of the first embodiment of the present invention.

In the following description, since left and right sides of respective elements, namely, sunshade clip, spectacles and a spectacle frame, are symmetrical, only one side will be designated by reference numerals and explained, except for lens units thereof. Further, the constituent elements of alternative embodiments corresponding to those of a preferred embodiment of the present invention are designated by the same reference numerals.

The interchangeable spectacles and sunshade clip assembly of the present invention comprises spectacles 1, a spectacle frame 50 to be detachably attached to the spectacles 1 to form a spectacles/spectacle frame assembly, and a sunshade clip 100 to be detachably attached to the spectacles/spectacle frame assembly.

The spectacles 1, spectacle frame 50 and sunshade clip 100 are selectively attachable to one another by means of magnets, which are appropriately positioned such that opposite polarities face.

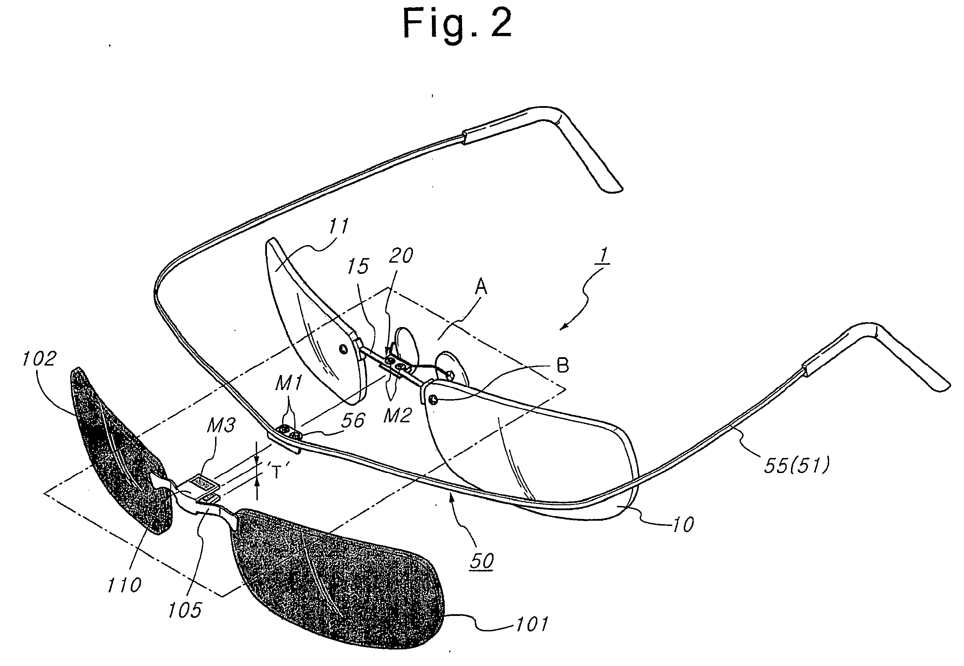

Referring to Figs. 1 and 2, the spectacle frame 50, as a basic framework of the interchangeable spectacles and sunshade clip assembly according to the present invention, comprises a frame bar 55 integrally formed with a pair of temple arms 51 with no hinge. Here, the shape of the temple arms 51 is not limited only to that shown in the annexed drawings, but also includes various designs.

That is, the frame bar 55, integrally formed with or hingedly connected to the temple arms 51, takes the form of an upper rim portion of a conventional spectacles lens frame. Thereby, the frame bar 55 serves as a basic frame to which both the spectacles 1 and the sunshade clip 100 are detachably attached.

At the center of the frame bar 55 is integrally affixed a magnet piece 56 extending rearward, i.e. protruding toward the spectacles 1. The magnet piece 56 takes the form of a flat plate piece made of metal, and incorporates one or more highly-magnetic magnets M1. Alternatively, the magnet piece 56 itself is a magnetizied element having the function of a magnet.

The spectacles 1, to be detachably attached to the spectacle frame 50, comprise a pair of lenses 10 and 11. In a preferred embodiment of the present invention, the lenses 10 and 11 have no lens frames and are connected to each other by means of a bridge 15. Here, the bridge 15 is bolted to the lenses 10 and 11.

At the center of the bridge 15 is affixed an approximately U-shaped insert 20 so as to correspond to the magnet piece 56 of the frame bar 55. The insert 20 consists of a pair of upper and lower insert pieces 21 and 22, and one or more magnets M2 are inserted into one of the insert pieces 21 and 22. Meanwhile, instead of the above described spectacles 1 having no lens frames, other spectacles, such as metal-rimmed spectacles, are also applicable to the present embodiment so as to achieve the same operational effects as the rimless spectacles 1.

With such a configuration as described above, the magnet piece 56 of the frame bar 55 is fitted into the insert 20 of the spectacles 1 and is fixedly attached thereto through attachment of the magnets M1 and M2.

Herein, in order to ensure more various combination of the spectacles and spectacle frame, there are provided a plurality of spectacles and spectacle frames having different shapes, enabling production of various designs of the spectacles/spectacle frame assembly.

To the spectacles/spectacle frame assembly is detachably attached the sunshade clip 100 to function as sunglasses.

In the preferred embodiment of the present invention, the sunshade clip 100 comprises a pair of sunshade lenses 101 and 102 having no lens frames, and an injection molded sunshade bridge 105 to connect the sunshade lenses 101 and 102 to each other. It will be recognized that the shape of the sunshade clip 100 is not limited only to the preferred embodiment, but also includes various designs, such as sunshade clips having sunshade lens frames.

At the center of the sunshade bridge 105 of the sunshade clip 100 is provided an approximately U-shaped coupling insert 110, which is integrally injection molded with the sunshade bridge 105. The coupling insert 110 is positioned to correspond to the magnet piece 56 of the frame bar 55 fitted in the insert 20 of the spectacles 1. The coupling insert 110 consists of a pair of upper and lower insert pieces 111 and 112, and a magnet M3 is inserted into a respective one of the insert pieces 111 and 112.

The upper and lower insert pieces 111 and 112 of the coupling insert 110 define a gap having a predetermined width T therebetween. The predetermined width T is determined to receive the insert 20 fitted with the magnet piece 56.

With such a configuration, the sunshade clip 100 is attached to or detached from the spectacles/spectacle frame assembly by means of the coupling insert 110 thereof, and can be selectively used as occasion demands.

As stated above, the interchangeable spectacles and sunshade clip assembly of the present invention is achieved by combining the spectacles 1, spectacle frame 50 and sunshade clip 100 freely selected from among a plurality of various different designs of spectacles, spectacle frames and sunshade clips depending on the wearer's taste. This means that the assembly of the present invention can be embodied into various designs.

Fig. 6 illustrates an alternative form of the fist embodiment of the present invention. In the present embodiment, the sunshade clip 100 comprises a coupling insert 110-1, which has an approximately L-shaped form so that it is seated and attached onto an upper surface of the insert 20 of the spectacles 1. This allows the sunshade clip 100 to be more easily attached to or detached from the spectacles 1.

Fig. 7 illustrates another alternative form of the first embodiment of the present invention. Here, the sunshade clip 100 comprises a coupling insert 110-2, which has a planar protrusion form and incorporates the magnet M3. In this case, by making use of only a magnetic force of the magnet M3, the coupling insert 110-2 can achieve the same operational effects as the previous embodiments. As shown, the coupling insert 110-2 of the sunshade clip 110 is attachable to the spectacles 1 from above and below of the insert 20 of the spectacles 1. In the present embodiment, the sunshade clip 110 is configured to have sunshade lens frames.

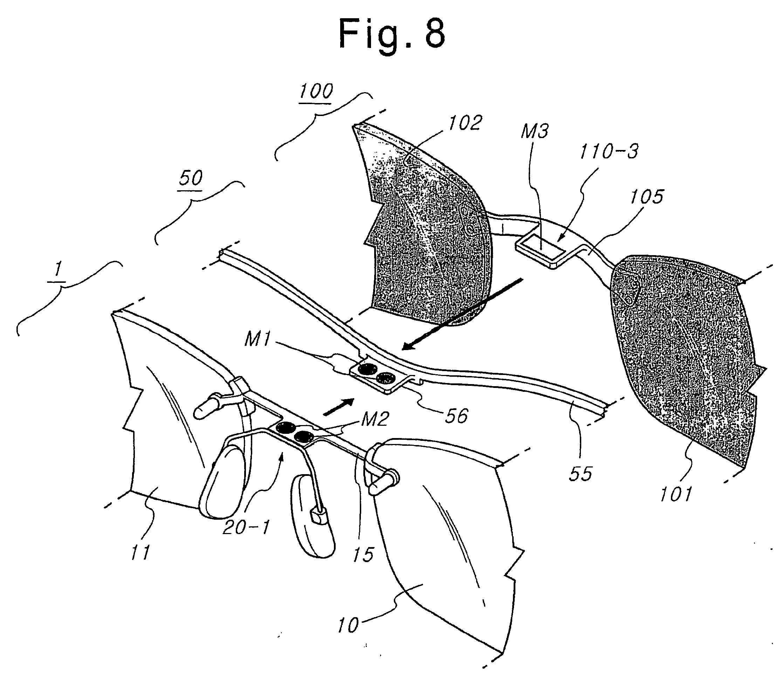

Fig. 8 illustrates the third alternative form of the first embodiment of the present invention. Here, the sunshade clip 100 comprises a magnet piece 110-2 instead of the said coupling insert, which has a planar protrusion form and incorporates the magnet M3 and another magnet piece 20-1 is provided with magnet M3 to cooperate as shown.

In this case, several combinations of the magnet piece 20-1 of spectacles 1 , the magnet piece 56 of spectacle frame 50 and magnet piece 110-3 of sunshade clip 100 can be possibly obtained to make different assemblies of spectacles and sunshade clips.

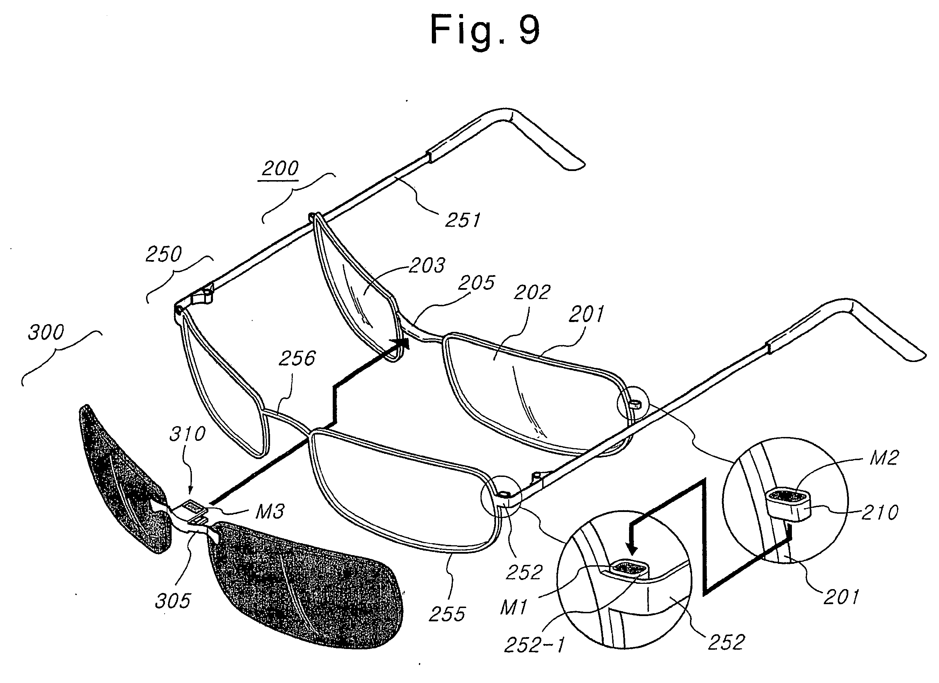

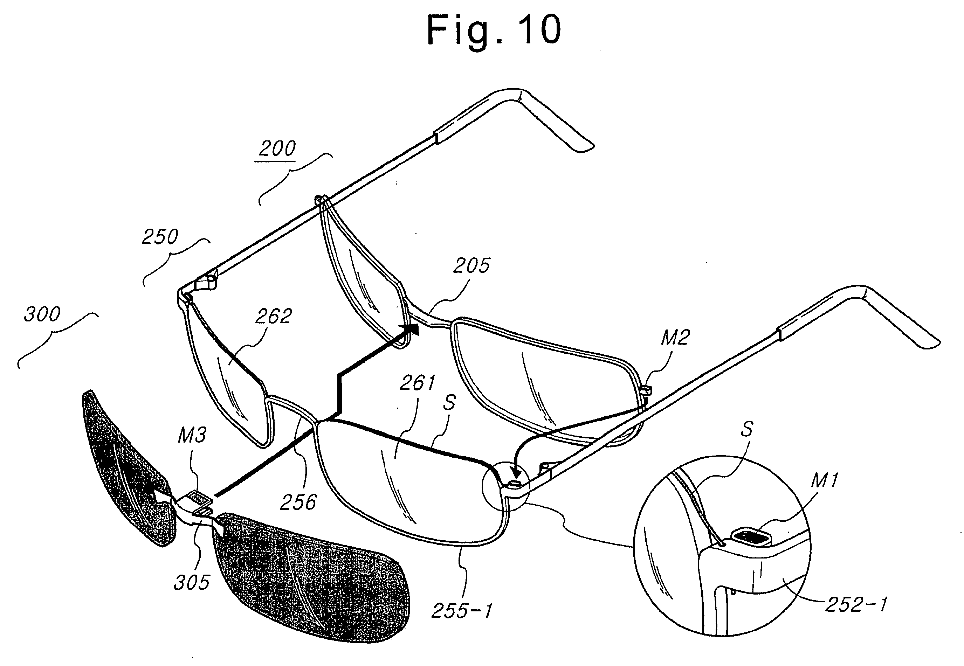

Fig. 9 and 10 illustrate the second preferred embodiment of the present invention. Here, the spectacle frame 250 can be chosen among several types of designs and colors and a hinge leg 252 connected with the temple arms 251 hingedly.

In fig. 9, the spectacle frame 50 without spectacle lenses is provides as an example and a magnet holder 252-1 having magnet M1 is provided at the inner side of hinge leg 252.

Additionally, spectacles 200 can be chosen among various designs, and the selected design shows a Lens frame 201 holds lenses 202,203 and the magnet holder 210 having the magnet M2 are provided at the both ends of the lens frame 201 to cope with the magnet M1 of the lens frame 250.

A horizontal planar bridge 205 of spectacles 200 is positioned at the upper or lower side of frame bride 255 of spectacle frame 250 and is made of magnetic metal material to meet another magnet M3.

The same configuration of sunshade clip 100 having the coupling insert 310 including the magnet M3 of the first embodiment can be adopted as a sunshade clip 300 to be inserted into the bridge 205 of spectacles 200.

With such configuration as described above, firstly, magnet M1 of hinge leg 252 of spectacles frame 250 and magnet M2 of lens frame 201 of spectacles 200 are coupled with magnetic attachment, and the coupling insert 310 of sunshade clip 300 is fitted into the bridge 205 of spectacles 200 positioned at the upper or lower side of frame bridge 255 of spectacle frame 250.

This makes the users choose one combination among several types of spectacles and sunshade clips with selective combination of spectacles 200, spectacle frame 250 and sunshade clip 300.

Fig. 10 shows another shape of spectacle frame 250 can be chosen. In this embodiment, the spectacle frame 250 is shaped as a half opened upwardly and the other lenses 261,262 are fixed with the a string S.

As a derivation of this embodiment, the coupling insert 310 including the magnet M3 can be located at the both end side of the sunshade clip 300 to be inserted into the combined magnet M1 of hinge leg 252 of spectacles frame 250 and magnet M2 of lens frame 201 of spectacles as shown in circular part A.

In the above description, although it is explained that the magnet piece of the spectacle frame, the insert of the spectacles, and the coupling insert of the sunshade clip incorporate the plurality of magnets M1, M2 and M3, respectively, it is possible to achieve the same operational effects as the above described configuration even if one of the corresponding elements is made of a magnetically-induced material, and the other one is provided with the magnets, or one of the corresponding elements is magnetized to function as a magnet.

As apparent from the above description, the present invention provides an interchangeable spectacles and sunshade clip assembly in which spectacles and a sunshade clip, which are freely selectable from among various designs of spectacles and sunshade clips, are selectively attached to a spectacle frame as a basic framework, resulting in various designs of the assembly to meet the wearer's taste.

Although the preferred embodiment of the present invention have been disclosed for illustrative purposes, those skilled in the art will appreciate that various modifications, additions and substitutions are possible, without departing from the scope and spirit of the invention as disclosed in the accompanying claims.

## Claims

1. Interchangeable spectacles (1) and sunshade clip (100) assembly comprising:
a spectacle frame (50) including a frame bar (55) integrally formed with or hinge connected to a pair of temple arms (51) so as to serve as a lens frame, a magnet piece (56) extending rearward from the center of the frame bar (55), and one or more magnets (M1) incorporated in the magnet piece (56);
said spectacles including a pair of lenses (10, 11) connected to each other via a bridge (15), an approximately U-shaped insert (20) centrally affixed at the bridge (15), the insert (20) being positioned to correspond to the magnet piece (56) affixed at the center of the frame bar (55) and consisting of upper and lower insert pieces (21, 22), and one or more magnets (M1) incorporated in one of the upper and lower insert pieces (21, 22); and
a sunshade clip (100) including a pair of sunshade lenses (101, 102) connected to each other via a sunshade bridge (105), an approximately U-shaped coupling insert (110) integrally injection molded with the sunshade bridge (105), the coupling insert (110) being positioned to correspond to the magnet piece (56) of the spectacle frame (50) fitted in the insert (20) of the spectacles (1) and consisting of upper and lower insert pieces, and a magnet (M1) incorporated in a respective one of the insert pieces (21, 22),
whereby the spectacles (1), the spectacle frame (50) and the sunshade clip (100) are selectively combined with one another to achieve various different designs of the assembly.

2. The assembly as set forth in claim 1, wherein the sunshade clip (100), instead of the approximately U-shaped coupling insert (110), includes a coupling insert (110) having an approximately L-shaped form so as to be seated and attached onto an upper surface of the insert (20) of the spectacles (1).

3. The assembly as set forth in claim 1, wherein the sunshade clip (100), instead of the approximately U-shaped coupling insert (20), includes a coupling insert having a planar protrusion form so as to be fixedly held on the spectacles (1) by making use of only a magnetic force of a magnet (M1) incorporated therein.

4. The assembly as set forth in claim 1, wherein the magnet piece (56) of the spectacle frame (50), the insert (20) of the spectacles (1), and the coupling insert (110) of the sunshade clip (100) are magnetized, or made of a magnetically induced material, instead of incorporating the one or more magnets (M1), respectively.

5. An interchangeable spectacles and sunshade clip assembly comprising:
a spectacle frame (250) chosen among various designs, and having a lens frame (201) connected with a bridge (255) and including a pair of temple arms, including a magnet holder having magnet (M1) at the inner side of hinge leg,
spectacles (200) selected among various designs, including a lens frame (201) holding lenses (202, 203) and the magnet holder (210) having the magnets (M2) at the both ends of the lens frame (201) to cope with the said magnet (M1) of the said spectacle frame (250), a horizontal planar bridge (205) positioned at upper or lower side of frame bridge (255) of spectacle frame and is made of magnetic metal material to meet other magnet,
a sunshade clip (300) including the coupling insert (310) having the magnet (M3) to be inserted into the said bridge (255) of the said spectacles (200);
whereby the magnet (M2) of hinge leg (252) of spectacle frame (250) and magnet (M2) of lens frame (201) of spectacles are coupled, and the coupling insert (310) of sunshade clip (300) is fitted into the bridge (255) of spectacles positioned at the upper or lower side of frame bridge of spectacle frame (250) to make the full combination of spectacles and sunshade clip and to achieve various different designs of the assembly.

6. The assembly as set forth in claim 5, wherein the magnet piece of the spectacle frame (250), the insert of the spectacles, and the coupling insert (310) of the sunshade clip (300) are magnetized, or made of a magnetically induced material, instead of incorporating the one or more magnets, respectively.
